# NEW EUROPEAN PATENT SPECIFICATION

(11) **EP 0 556 053 B2**
(45) Date of publication and mention of the opposition decision: **29.08.2001**
(45) Mention of the grant of the patent: 06.05.1998
(21) Application number: 93301014.2
(22) Date of filing: 12.02.1993
(51) Int. Cl.: C08F 14/06

(54) **Polymerisation process**
Polymerisationsverfahren
Procédé de polymérisation

(30) Priority: 13.02.1992 EP 92301170
(43) Date of publication of application: 18.08.1993
(73) Proprietor: EUROPEAN VINYLS CORPORATION TECHNOLOGY AG, CH-6300 Zug (CH)
(72) Inventor: Berengo, Francesco, I-30174 Zelarino, Mestre (IT); Jackson, Peter Frederick, Tarporley, Cheshire, CW6 0TW (GB)
(74) Representative: Fisher, Adrian John

(56) References cited:
- EP-A- 0 144 614
- EP-A- 0 206 295
- FR-A- 2 078 593
- FR-A- 2 111 449
- FR-A- 2 173 021
- FR-A- 2 230 660
- GB-A- 1 435 425
- JP-A- 55 005 995

## Description

The present invention relates to a process for the homo- or copolymerisation of vinyl chloride monomer in aqueous miniemulsion.

Emulsion polymerisation of Vinyl Chloride Monomer (VCM) comprises the polymerisation of VCM dispersed in water. The VCM is dispersed in the water by the action of an emulsifier, and polymerisation takes place in the micelles thus created, which are of colloidal size (ca. 5-150nm in diameter). Characteristically of emulsion polymerisation, a water-soluble initiator is used to drive the polymerisation process.

Miniemulsion polymerization of vinyl chloride monomer (VCM) comprises the polymerization of VCM dispersed in water. The VCM is dispersed in water by the action of a mixture of an ionic emulsifier and alcoholic co-surfactants, and polymerization takes place in the monomer droplets stabilized by the mixed liquid crystal structures created by interaction between the components of the emulsifying system, called emulsion water. The monomer droplets covered by liquid crystals are from 0.2 to 3.0 µ in diameter, with a broad distribution around 0.9 µ, which is the same as the final particle size distribution of the resultant latex after polymerization.

Characteristically of VCM miniemulsion polymerization, monomer soluble initiators are used to drive the polymerization process. The use of thermally decomposable water soluble peroxides is reported in literature but not industrially applied, due to the poor properties of the PVC derived by their use. The initiator Is a thermally decomposable free radical generator such as an organic peroxide or a monomer soluble azo-compound. The initiator is solubilised within the monomer droplets and here the thermally-induced radicals initiate the polymerization process.

Typically, the vinyl chloride polymers produced by the miniemulsion polymerization process are suitable for use as a particular kind of paste polymers, due to their peculiar characteristics. These are polymers which, when suspended in a plasticizer, form a relatively low viscosity mix which can be used in a variety of moulding processes.

A major problem apparent during VCM polymerisation by the miniemulsion process is the need to employ large amounts of thermally decomposable organo-soluble initiators, such as azo compounds and peroxides, in order to achieve a reasonably rapid rate of reaction. However, the risk of autoacceleration, that is a feedback phenomenon in which increase of the reaction temperature causes an increase in the rate of initiator decomposition, which further increases the rate of reaction and therefore the temperature, increases proportionally with the amount of initiator used. This can give rise to irregular reaction kinetic profiles and negatively influence the properties of the polymer produced.

This problem has been previously encountered with microsuspension polymerisation processes. In contrast to miniemulsion polymerisation processes, microsuspension polymerisation requires the dispersion of VCM In water by homogenisation in a mechanical homogeniser. The dispersion thus produced is stabilised by the action of a dispersing agent, and the VCM is maintained in aqueous suspension in the form of small droplets. The initiator used in such systems is monomer-soluble, In contrast to water-soluble, and each droplet thus behaves as though It were a small individual bulk polymerisation system.

The problem of autoacceleration has been discussed, for example, in European Patent Application 0 038 634 (Imperial Chemical Industries Ltd.). In this application, it was noted that autoacceleration gave rise to a sharp increase in the reaction temperature at the end of the process, when most of the monomer has been converted to polymer. This places a great strain on the reactor cooling system.

Solutions to this problem have been suggested. For example, in British Patent 1 170 963 it was suggested that use of a seeding product containing all the necessary initiator can usefully reduce the autoacceleration rate. In British Patent 1 435 425 an alternative method is disclosed in which the initiator, always present, in the seed polymer, is activated by a monomer-soluble metal complex rather than by heat. The metal complex activator can either be introduced to the reaction vessel gradually throughout the polymerisation process, or can be produced progressively *in situ* as the reaction proceeds. Typical metal complexes for use as activators in the above processes comprise a variety of transition metals complexed by agents which can render them monomer-soluble, such as mono- and polycarboxylic acids which are only sparingly water-soluble, alkyl-phosphoric acids, and others.

In European Patent Application 0 038 634 it is disclosed that the metal complex activation technique is applicable to processes employing conventional unseeded microsuspension polymerisation. The initiator is activated while in the free state, that is, not contained within particles of seeding product. Using such a method, however, problems with the viscosity of pastes manufactured from the polymer produced can be encountered. These are claimed to be circumventable by appropriate selection of the homogenisation conditions used to prepare the microsuspension mix.

The mechanism of catalyst activation in such systems is a redox reaction, in which the long chain peroxide compound is activated by an activator comprising a metal ion complexed by a mono- or polycarboxylic acid, or a lactone. A preferred complexing agent is ascorbic acid. However, it has been discovered, as disclosed in EP 0 306 433 (Good-year), that ascorbic acid, isoascorbic acid and certain other ascorbic acid derivatives may be utilised to activate peroxidic free radical generators in the absence of metals.

All of the above methods are applied in a microsuspension polymerisation environment.

The initiators used in these methods are monomer-soluble long-chain organic peroxides such as lauroylperoxide or cetylpercarbonate. Such initiators would be applicable for use in miniemulsion polymerisation, but would lead to large amounts of pebble and polymer build-up on the reactor walls. Furthermore, since it has been reported that the homogenisation technique is crucial to polymer quality in the method of EP-A-0 038 634, one would doubt the applicability of the method to spontaneous miniemulsion polymerisation, in which no homogenisation takes place.

It has now been found that the above-described system can successfully be applied to miniemulsion polymerisation processes. Surprisingly, this is achieved by using peroxides with a partial water solubility.

The reaction is observed to proceed in a controllable manner, with no autoacceleration, and the catalytic system is essentially temperature-independent.

In a first aspect of the present invention, therefore, there is provided a method for the polymerisation of vinyl chloride monomer (VCM) in aqueous miniemulsion comprising the steps of:
(i) preparing an emulsion system comprising an emulsion water mixture preformed by mixing water sodium lauryl sulphate, an alcoholic mixture as a co-surfactant and, optionally, a pH buffer system;
(ii) loading the mixture into a reaction vessel;
(iii) adding an initiator which is the peroxidic component of a redox system, which redox system comprises an at least partially water-soluble thermostable peroxide and an activator which is a metallic compound complexed by a reducing agent;
(iv) adding VCM and heating the mixture to reaction temperature; and
(v) progressively adding the activator to the reaction vessel or progressively forming it therein.

Preferably, the emulsion water is prepared by gentle stirring of the components at a temperature close to the melting temperature of the alcoholic components.

The initiator is a thermostable peroxide which is activated by an activator component, which can be added to the reaction in a controlled manner thus allowing the rate of reaction to be controlled independently of the reaction temperature. Autoacceleration can thus be avoided,

Preferably, the pH buffer system does not comprise phosphates, which interact with transition matals in a detrimental manner. Preferably, the pH is bufferred within a range of 7.0 to 9.5. Advantageously, the pH is buffered at 8.0. However, it is a feature of the present invention that the polymerisation process may be conducted at a pH below the preferred range, without the addition of pH buffers.

The K value of the polymer can be regulated by adjusting the reaction temperature. Particularly preferred is a reaction temperature of 53°C, and a K value of 70. This is made possible by the temperature independence of the new catalytic system, and allows production of polymers suitable for FDA-approved applications by the elimination of the cross-linking reagent.

Altematively, a cross-linking reagent may be included in the emulsion mixture.

The activator is a metallic compound complexed by a reducing agent. The metallic compound may be, for example, a water-soluble metallic sulphate, acetate, chloride or nitrate. The complexing reducing agent may be, for example, a carboxylic acid, a polycarboxylic acid or a lactone. Particularly preferred are ascorbic acid and derivatives thereof.

The activator may be alternatively generated by complexing the metallic compound with the reducing agent, and subsequently added to the reaction vessel progressively during the polymerisation process in order to maintain a constant reaction temperature and consequently a constant reaction rate. Alternatively, one or both of the components of the activator may be added to the reaction vessel independently,

Preferably, the alcoholic mixture is comprised of CB to C20 linear fatty alcohols. Advantageously, C16 to C20 linear fatty alcohols are used.

Preferably, the peroxidic compound may be a short-chain organic peroxide, advantageously having less than 12 carbon atoms. Preferably, the chain is branched. Examples include an alkyl-perhester or percarbonate, for example t-butyl peroxy-diethylacetate, t-butylperoxyisopropylcarbonate, t-butylperoxypivalate, t-butyl peroxy-3.5.5-trimethylhexanoate, t-butyl peroxy-2-ethylhexanoate or cumene hydroperoxide.

Alternatively, the peroxidic compound may be a water-soluble inorganic peroxide, for example potassium persulphate or hydrogen peroxide. Using water-soluble peroxides, however, a different distribution of latex particle size is achieved.

Advantageously, the peroxides chosen have a very long half-life, of at least 50 hours, advantageously of more than 50 hours and usefully greater than 500 hours, when measured by thermal decomposition at the reaction temperature. This ensures that radical generation through thermal decomposition is kept to an absolute minimum.

The resistance of the peroxides to thermal decomposition is essential in allowing accurate control of the kinetic profile of the reaction through the variation of the rate of addition of the activator.

The use of long-chain peroxides known from the prior art, for example di-lauroylperoxide or bis(4-t-butylcyclohexyl) peroxydicarbonate, in the method of the invention is found to give a poor quality of polymer latex. This latex found to contain uncontrollable amounts of pebbles, and to cause unacceptable polymer build-up on the reactor walls.

This behaviour is thought to be due to interactions between the long hydrocarbon chains of the peroxides and the alcoholic components of the emulsion mixture, which are of approximately the same length. Attempts to overcome this problem by reducing the quantity of alcoholic components in the emulsion mixture resulted in a dramatic increase in the formation of berries and build-up. Surprisingly, the problem is totally eliminated by the use of short hydrocarbon chain peroxides with a partial water solubility. The production of pebbles is greatly reduced, and build-up and berries substantially eliminated.

Moreover, it proved possible to reduce the quantity of emulsifiers used in the emulsion mixture by between 20 and 50% without reducing the quality and yield of the latex. Preferably, between 1.0 and 1.8 phm of emulsifier are used.

Therefore, in a further aspect of the invention, there is provided a method for the polymerisation of VCM in aqueous miniemulsion according to the first aspect of the invention in which the amount of emulsifier in the emulsion mixture is reduced by between 10 and 50%, preferably between 20 and 30%.

This reduction, surprisingly, allowed the formation of latex particles which match the traditional particle size of 0.7-0.75 µ without encountering problems of latex instability. It was found that the particle size of the latex could be adjusted by altering the emulsifier/alcohol ratio and the water/surfactant ratio. It was found that a reduction of as much as 50% relative to standard aqueous emulsion compositions was possible without any degradation of latex quality.

Therefore, in a still further aspect of the invention, there is provided a method for the polymerisation of VCM in aqueous miniemulsion according to the first aspect of the invention, in which a reduction in the emulsifier alcohol ratio and the surfactant to water ratio of up to 50% can be achieved without degradation of latex quality. Advantageously, the latex particle size can be adjusted by altering the ratios.

It is an advantage of the present invention that very rapid reaction times can be obtained, as demonstrated in the Examples. It was found that the reaction time was also dependent on the cooling capacity of the reaction vessel. A higher cooling capacity allowed a more rapid addition of activator, and thus a shorter reaction time.

In order to allow the use of a reflux condenser, with which it is possible to achieve the fastest reaction times, it was found useful to treat the condenser by spraying it with antifouling agents before the reaction, or to bring it into use gradually by keeping it under pressure of inert gases, and subsequently slowly removing the inert gases. This helps to prevent the spilling-over of foams into the condenser pipes and the contamination of these pipes by the surfactants present in the emulsion mixture. Alternatively, defoaming solutions could be added in batch to the vessel to prevent foaming during the reaction.

A further advantage of the present invention is that the problems associated with build-up formation on the walls of polymerisation reactors are dramatically reduced and in substance eliminated. This advantage is obtained not only after the reactor has been treated with anti-fouling agents such as those commonly used in the art, known as build-up suppressants (BUS), but also in reactors which have not been subjected to BUS treatment.

In the polymerisation processes which have been described in the prior art the build-up of polymerised material on the reactor walls is unacceptable in the absence of BUS treatment. Even when BUS are used, removal of build-up is the single largest cause of reactor down-time, which has obvious economic implications. The provision of a polymerisation process in which no build-up occurs is both technically surprising in view of what has gone before and of exceptional advantage in the field of vinyl chloride polymerisation.

According to a further aspect of the invention, therefore, there is provided a method for the polymerisation of vinyl chloride as described hereinbefore, wherein substantially no build-up occurs on the walls of the polymerisation reactor in the absence of treatment with build-up suppressants.

The invention will now be described by way of the following Examples.

### COMPARATIVE EXAMPLE 1

An emulsion water was prepared by heating water to 50°C, adding an alcohol mixture, heating to 70°C and adding Na Laurylsulphate as an emulsifier, then heating to 90°C for two hours. The following mixture was then prepared and loaded into a 60 I jacketed reactor:

| | | |
|---|---|---|
| VCM | Kg | 16.2 |
| H₂O | Kg | 21.1 } |
| Na Laurylsulphate | g | 153.9 } Emulsion water |
| ALCOHOLS | g | 183.0 } |
| AIBN | g | 8.1 |
| CROSS LINKING AGENT | g | 8.6 |
| NaHCO₃ | g | 11.1 |
| (AIBN = azo-bis-isobutyronitrile) | | |

The alcohols used consist of a mixture of stearyl and cetyl alcohols in a molar ratio of 3:1. After loading the emulsion water, the solid additives and VCM the batch was heated to the reaction temperature of 55°C, stirring at 100 rpm. The reaction time was 10 hrs 36'. The batch was vented off and stripped of residual VCM, giving a latex with a particle size of 0.72 µ on average, a solids content of 41%, with 0.7% of pebbles and 0.3% of build-up.

### COMPARATIVE EXAMPLE 2(a)

The reactor and the procedure was the same as that adopted for Example 1. The aim was to attempt to apply a monomer-soluble long-chain peroxide instead of AIBN to the miniemulsion medium. A dramatic quantity of build-up is produced.

| Formulation | |
|---|---|
| VCM | Kg 14.4 |
| H₂O | Kg 18.7 |
| Na Laurylsulphate | g 137 |
| ALCOHOLS | g 163 |
| NaHCO₃ | g 11.1 |
| CROSS LINKER | g 2.3 |
| di-LAUROYLPEROXIDE | g 0.130 |

A latex which contains 37.5% in pebbles and build-up was obtained.

### COMPARATIVE EXAMPLE 2(b)

The reactor and the procedure were the same as used in Example 2(a), but using 4.32 g of bis (4-t-cyclohexyl) peroxydicarbonate as an initiator, giving a latex with 24.0% of build-up.

### COMPARATIVE EXAMPLE 3

The aim was to use as an initiator a short hydrocarbon chain peroxide with a rather short half-life time at the reaction temperature. The reactor and procedure were the same as in Example 1; the formulation charged was

| | |
|---|---|
| VCM | Kg 14.4 |
| H₂O | Kg 18.7 |
| Na Laurylsulphate | g 137 |
| ALCOHOLS | g 163 |
| NaHCO₃ | g 11.1 |
| DAM | g 2.3 |
| t-BUTYLPEROXYPIVALATE | g 3.6 |
| (DAM = di-allyl maleate, a cross-linker). | |

The reaction was carried out in 10 hrs 10', giving a latex with an average particle size of 0.64 µm, a pH of 9.0 and a solids content of 35,8%, with 0.2 phr of build-up and 0.8 phr pebbles.

### EXAMPLE 4

The aim was to compare the reactivity of the same peroxide tested in the previous Example, which is active by thermal decomposition, when activated by the system proposed in the present invention. The reactor was the same as that of Example 1, with the following formulation charged:

| | |
|---|---|
| VCM | Kg 14.4 |
| H₂O | Kg 18.7 |
| Na Laurylsulphate | g 137 |
| ALCOHOLS | g 163 |
| NaHCO₃ | g 11.1 |
| CuSO₄*5H₂O | g 0.27 |
| t-BUTYLPEROXYPIVALATE | g 3.6 |

After the batch reached the reaction temperature of 53°C, lowered with respect to the previous Example in order to obtain the correct K value of 70, Ascorbic Acid in a 0.2% solution was added. 60 ml was added in the first 5', then about 200 ml/hr during the remainder of the reaction, lowering the addition rate according to the batch temperature. The addition was phased out towards the end of the reaction, in order to contain the heat kick due to autoacceleration within 6 °C. A reaction time of 4 hrs 30' was obtained, a reduction of 55% in comparison with the Example 3. The latex had a solids content of 41.4%, an average particle size of 0.65 µ, 0.6 phr of pebbles and no build-up. The latex had a pH of 8.0.

### EXAMPLE 5

This trial was carried out by using the same reactor and the same procedure as that of Example 4, but using as the peroxide a short chain partially water-soluble perhester, which has a very high half-life at 53°C and does not give any reactivity when thermally decomposed: hence, all the reactivity observed in this case is completely due to the activation reaction. Formulation charged:

| | |
|---|---|
| VCM | Kg 14.4 |
| H₂O | Kg 18.7 |
| Na Laurylsulphate | g 137 |
| ALCOHOLS | g 163 |
| NaHCO₃ | g 11.1 |
| CuSO₄*5H₂O | g 0.27 |
| t-BUTYL-ISOPROPYL PEROXYCARBONATE | g 5.8 |
| ASCORBIC ACID SOLUTION 0.2% | |

The reaction time was 3 hrs 50', giving a latex with a solids content of 41.8%, an average size of 0.61 µ, 0.1 phr of pebbles and no build-up.

### EXAMPLE 6 - Activation with Reduced Quantities of Emulsifiers

The aim was to increase the average size of the latex particles by lowering the surfactants content.

### EXAMPLE 6(a) - Same reactor procedure and formulation as Example 5, but with 123 g Na Laurylsulphate and 157 g alcohol.

The reaction time was 3 hrs 56'. A latex of pH 9.5 and average particle size 0.64 µ was obtained, with no build-up and 0.1 phr of pebbles.

### EXAMPLE 6(b) - Same reactor, procedure and formulation as Example 5, but with 102 g Na Laurylsulphate and 122 g alcohol.

The reaction time was 3 hrs 54'. A latex of pH 9.0 and average particle size of 0.67 µ was obtained, with 0.3 phr of pebbles and no build-up.

### EXAMPLE 7(a) - Activation with a Water-Soluble Peroxide

This trial was carried out with the same reactor procedure and formulation of Example 4, but using a water-soluble inorganic peroxide. Formulation:

| | |
|---|---|
| VCM | Kg 14.4 |
| H₂O | Kg 18.7 |
| Na Laurylsulphale | g 102 |
| ALCOHOLS | g 122 |
| NaHCO₃ | g 11.1 |
| CuSO₄*5H₂O | g 0.27 |
| K PERSULPHATE | g 11 |
| ASCORBIC ACID 0.2% solution | |

The reaction time was 4 hrs 40'. A latex with a solid content of 35.0%, a pH of 5.0 and an average particle size of 0.76 µ was obtained, with 0.2% pebbles and no build-up.

### Example 7(b) - The same formulation and procedure as in example 7(a), but using 0.2 phm of hydrogen peroxide in place of the potassium persulphate, and omitting the NaHCO₃.

The reaction time was 3 hrs 40 '. The latex obtained had a solid content of 41%, a pH of 3.0, and a particle size distribution broader than that of the latex of example 7(a), averaging at 0.71µ. 0.1 phr of pebbles and no build-up were observed.

### EXAMPLES 8, 9 - Semi-Tech Trials Scaling Up Examples Example 8 - AIBN 180 kG Scale Trial

Autoclave of 650 1, procedure as in Example 1, formulation charged:

| | |
|---|---|
| VCM | Kg 180 |
| H₂O | Kg 234 |
| Na Laurylsulphate | Kg 1.710 |
| ALCOHOLS | Kg 1.130 |
| NaCO₃ | g 138.6 |
| AIBN | g 90 |
| DAM | g 28.8 |

The reaction time was 10 hrs 40', and a latex of pH 8.5 and an average particle size of 0.72 µ with a solid content 41.0% was obtained, with 0.1 phr build-up and 0.3 phr pebbles. Plastisol viscosity (0.5 dop ratio): 1 hrs aged 160 poise (10 rpm), 24 hrs aged 280 poise (10 rpm).

### Example 9 - Activation 180 KG Scale Trial

Same reactor as Example 8, same procedure as Example 5, condenser inserted as previously described. Formulation charged:

| | |
|---|---|
| VCM | Kg 180 |
| H₂O | Kg 234 |
| Na Laurylsulphate | Kg 1.278 |
| ALCOHOL | Kg 1.530 |
| CuSO₄*5H₂O | g 3.4 |
| t-BUTYL-ISOPROPYL PEROXYCARBONATE | g 72 |
| ASCORBIC ACID SOLUTION | 0.2% solution (7600ml) |

The reaction time 5 hrs 39'. A latex of pH 8.2, average particle size 0.73µ and solid content of 40.8% was obtained, with no build-up and 0.3 phr of pebbles. Plastisol viscosity (0.5 dop ratio): 1 hrs aged 160 poise (10 rpm), 24 hrs aged 280 poise (10 rpm).

### Example 10

The same procedure and formulation of example 9 were used, but with the substitution of 0.06 phm t-butyl peroxy 3.5.5. trimethylhexanoate as the initiator. The reaction time was 5 hrs 40', during which 8100ml of 0.2% ascorbic acid solution were consumed. A latex having a solids content of 41% and an average particle size of 0.86µ was obtained, with no build up and 0.7 phr of pebbles.

### EXAMPLE 11 - Industrial Scale Trial

An industrial scale trial was carried out, using the same formulation and procedure of the previous semi-tech trials, using an industrial reactor having a volume of 27 m³. 9282 Kg of VCM was charged into the reactor, with t-butylperoxyisopropyl carbonate as the initiator, adding a 0.1% solution of ascorbic acid at the following rate: 200 I/hr for the first 2 hours, 100 I/hr for the next 2 hours, 75 I/hr for the next 2 hours followed by gradual reduction of the rate of addition to 0 l/hr over the next 2 hours. The total reaction time to pressure drop was 8 hours, with a total consumption of 700 I of ascorbic acid solution. This reaction time is 35% shorter than that of a comparable reaction carried out with conventional catalysis under the same conditions. The PVC latex obtained had a solids content of 40%, good stability and a low pebble content. No build-up was present on the reactor walls, and the average latex particle size was 0.73 µ.

### Example 12

A reaction was set up using the same procedure and formulation as that employed in comparative example 1. However, in contradistinction to that example, BUS chemical pre-treatment of the reactor was omitted and the AIBN initiator was replaced with t-butyl peroxy 3.5.5. trimethylhexanoate, as used in example 10.

Over 10 runs, a reaction time of between 6 and 10 hours was observed when a reflux condenser was used and between 10 and 20 hours without the condenser, depending on the rate of ascorbic acid addition and its concentration. After 10 runs, the reactor walls were found to be very clean, requiring no solvent treatment, due to the absence of build-up thereon.

## Claims

1. A method for the polymerisation of vinyl chloride monomer (VCM) in aqueous miniemulsion comprising the steps of:
(i) preparing an emulsion system comprising an emulsion water mixture preformed by mixing water, sodium lauryl sulphate, an alcoholic mixture as a co-surfactant and, optionally, a pH buffer system;
(ii) loading the mixture into a reaction vessel;
(iii) adding an initiator which is the peroxidic component of a redox system, which redox system comprises an at least partially water-soluble thermostable peroxide and an activator which is a metallic compound complexed by a reducing agent;
(iv) adding VCM and heating the mixture to reaction temperature; and
(v) progressively adding the activator to the reaction vessel or progressively forming it therein.

2. A method according to claim 1 wherein the emulsion mixture further comprises a cross-linking reagent.

3. A method according to any preceding claim wherein the initiator has a half life when measured by the rate of thermal decomposition at the reaction temperature of at least 50 hours.

4. A method according to any preceding claim wherein the initiator is an organic peroxide.

5. A method according to any preceding claim, in which the amount of emulsifier in the emulsion mixture is between 1.0 and 1.8 phm.

6. A method according to any preceding claim, further comprising the step of adjusting the particle size of the latex obtained by varying the emulsifier:alcohol ratio and the water:surtactant ratio.

7. A method according to claim 5, wherein the emulsifier:alcohol ratio and the water surfactant ratio are reduced.

8. A method according to any preceding claim, wherein the polymerisation reactor is connected in series or in parallel with a reflux condenser, which is optionally treated with an antifouling solution before the reaction, in order to raise the cooling capacity of the reactor.

## Patentansprüche

1. Verfahren zur Polymerisation von Vinylchloridmonomer (VCM) in einer wäßrigen Miniemulsion, die folgenden Stufen umfassend:
(i) Herstellen eines Emulsionssystems, das ein Emulsionswassergemisch umfaßt, das vorgeformt wurde, indem Wasser, Natriumlaurylsulfat und ein alkoholisches Gemisch als gemeinsames oberflächenaktives Mittel und gewünschtenfalls ein pH-Puffersystem vermischt werden;
(ii) Laden des Gemisches in ein Reaktionsgefäß;
(iii) Zugabe eines Initiators, der die peroxidische Komponente eines Redoxsystems ist, wobei das Redoxsystem ein wenigstens teilweise wasserlösliches thermostabiles Peroxid und einen Aktivator umfaßt , der eine metallische Verbindung, die durch ein Reduziermittel komplexiert ist, ist;
(iv) Zugabe von VCM und Erwärmen des Gemisches auf Reaktionstemperatur; und
(v) allmähliche Zugabe des Aktivators zu dem Reaktionsgefäß oder allmähliche Bildung hiervon in diesem.

2. Verfahren nach Anspruch 1, wobei das Emulsionsgemisch weiterhin ein Vernetzungsreagenz umfaßt.

3. Verfahren nach einem der vorhergehenden Ansprüche, wobei der Initiator eine Halbwertszeit, gemessen durch die Geschwindigkeit der thermischen Zersetzung bei der Reaktionstemperatur von wenigstens 50 Stunden hat.

4. Verfahren nach einem der vorhergehenden Ansprüche, wobei der Initiator ein organisches Peroxid ist.

5. Verfahren nach einem der vorhergehenden Ansprüche, wobei die Menge an Emulgiermittel im Emulsionsgemisch zwischen 1,0 und 1,8 phm beträgt.

6. Verfahren nach einem der vorhergehenden Ansprüche, das ferner die Stufe der Einstellung der Partikelgröße des Latex umfassit, die erhalten wurde, indem das Emulgiermittel : Alkohol -Verhältnis und das Wasser : Oberflächenaktives Mittel - Verhältnis variiert wurde.

7. Verfahren nach Anspruch 5, wobei das Emulgiermittel:Alkohol-Verhältnis und das Wasser:oberflächenaktives Mittel-Verhältnis reduziert werden.

8. Verfahren nach einem der vorhergehenden Ansprüche, wobei der Polymerisationsreaktor in Reihe oder parallel mit einem Rückflußkühler geschaltet ist, der optional mit einer Verschmutzungsverhinderungslösung vor der Reaktion, um die Kühlkapazität des Reaktors zu steigern, behandelt wird.

## Revendications

1. Procédé de polymérisation de monomère de chlorure de vinyle (MCV) en mini-émulsion aqueuse comprenant les étapes de:
(i) préparation d'un système d'émulsion comprenant un mélange aqueux en émulsion préformé par mélange d'eau, d'un laurylsulfate de sodium, d'un mélange alcoolique comme agent co-tensioactif et, facultativement, d'un système tampon de pH;
(ii) chargement du mélange dans un vase à réaction;
(iii) addition d'un initiateur qui est le composant peroxydique d'un système redox, lequel système redox comprend un peroxyde thermostable au moins partiellement soluble dans l'eau et un activateur qui est un composé métallique complexé par un agent réducteur;
(iv) addition de MCV et chauffage du mélange à la température de la réaction; et
(v) ajout progressif de l'activateur au vase à réaction ou sa formation progressive dans ce vase.

2. Procédé selon la revendication 1, dans lequel le mélange en émulsion comprend en outre un agent réticulant.

3. Procédé selon l'une quelconque des revendications précédentes, dans lequel l'initiateur a une demi-vie, mesurée par la vitesse de décomposition thermique à la température de la réaction, d'au moins 50 heures.

4. Procédé selon l'une quelconque des revendications précédentes dans lequel l'initiateur est un peroxyde organique.

5. Procédé selon l'une quelconque des revendications précédentes, dans lequel la quantité d'émulsifiant dans le mélange en émulsion est comprise entre 1,0 et 1,8 phm.

6. Procédé selon l'une quelconque des revendications précédentes, comprenant en outre l'étape d'ajustement de la taille particulaire du latex obtenu en faisant varier le rapport émulsifiant:alcool et le rapport eau:agent tensioactif.

7. Procédé selon la revendication 5, dans lequel le rapport émulsifiant:alcool et le rapport eau:agent tensioactif sont réduits.

8. Procédé selon l'une quelconque des revendications précédentes, dans lequel le réacteur de polymérisation est relié en série ou en parallèle avec un réfrigérant à reflux, qui est facultativement traité avec une solution anti-salissures avant la réaction, afin d'élever la capacité de réfrigération du réacteur.
